# EUROPEAN PATENT SPECIFICATION

(11) **EP 1 819 218 B1**
(45) Date of publication and mention of the grant of the patent: **05.10.2011**
(21) Application number: 05806018.7
(22) Date of filing: 01.11.2005
(51) Int. Cl.: A01K 73/045

(54) **PELAGIC TRAWL DOOR CONSTRUCTION AND METHOD**
PELAGISCHE SCHERBRETTKONSTRUKTION UND VERFAHREN
CONSTRUCTION DE PANNEAUX DE CHALUT PELAGIQUE ET PROCEDE

(30) Priority: 04.11.2004 US 625560 P; 18.07.2005 WO PCT/IS2005/000016
(43) Date of publication of application: 22.08.2007
(60) Divisional application: 10162588.7
(73) Proprietor: Hampidjan HF., 110 Reykjavik (IS)
(72) Inventor: VIGFUSSON, Gudmundur, IS-820 Hveragerdi (IS)
(74) Representative: Hedges, Martin Nicholas
(86) International application number: PCT/EP2005/011722
(87) International publication number: WO 2006/048258

(56) References cited:
- FR-A- 2 852 200
- GB-A- 523 452
- GB-A- 550 394
- GB-A- 670 222
- PL-B- 169 104
- US-A- 4 894 946
- DATABASE WPI Section PQ, Week 199325 Derwent Publications Ltd., London, GB; Class P14, AN 1993-203749 XP002362573 -& SU 1 741 701 A1 (IND FISHING RES PRODN ASSOC) 23 June 1992 (1992-06-23)
- HANSEN KURT, WILLEMAN DAVID: "Flydetrawlskovle, Forskellige geometriske parametres indflydelse på flydetrawlskovles virkningsgrad" August 1990 (1990-08), DANSK INSTITUT FOR FISKERITEKNOLOGI OG AKVAKULTUR , HIRTSHALS (DK) * pages 21-23 * * figure 25 *

## Description

### Field of the Invention

The present invention relates generally to trawl doors, and more particularly to pelagic trawl doors capable of providing enhanced and rather high efficiency in field operations. Trawl doors of the present invention are capable of significantly reducing the drag of a total trawl system and thus conserving fuel of the fishing trawler, with concurrent increased efficiency.

### Description of the Known Art

The trend in the art in pelagic trawl door design and manufacture is both to provide pelagic trawl doors of maximal efficiency and as well to produce flat trawl doors, as opposed to Vee (dihedral) trawl doors. It is widely believed and thus far unanimously experimentally confirmed that the greatest efficiency obtainable for pelagic trawl doors is by using flat trawl doors, rather than Vee shaped trawl doors. Thus, the trend in the industry is to design only flat trawl doors for high efficiency pelagic trawl door constructions, rather than a Vee (dihedral) shaped trawl door construction. In fact, in many developed high value pelagic trawl fisheries, such as for example the Alaskan Pollock fishery, Vee shaped pelagic trawl doors either are not in use, or are in use in such small numbers as to be insignificant.

As mentioned above, the trend in the art in the engineering, manufacture and use of pelagic trawl doors is to construct and deploy in the afield flat trawl door designs with the goal of increasing efficiency, it being widely held if not universally believed in the field that only flat trawl door designs are able to maximise the efficiency of the trawl door's performance. That is to maximise the horizontal spread of a given pelagic trawl net under a given set of conditions from a certain trawler, while minimizing the water resistance (drag) on the certain trawler, thus permitting lower fuel consumption, leading to maximal efficiency of the pelagic trawling operation.

Thus, it may be observed that while the trend in the art is to engineer, manufacture and use flat pelagic trawl door constructions, as opposed to Vee shaped pelagic trawl door constructions, the basis for such a trend is the fact that thus far flat pelagic trawl door constructions have optimised field operation efficiency for pelagic trawlers. In attempting to better address the need for maximal efficiency pelagic trawl doors, wide trawl doors that maximise buoyancy as well as airfoil shaped trawl doors that maximise lift (i.e. thrust) and minimize drag have also been proposed. An example of such a trawl door is that disclosed in US-A-4,640,037 which discloses a trawl door of generally airfoil cross section made from plate material. The door consists of a main deflector having a modified shape to form a plurality of slots along the forward edge of the main deflector in order to contribute to the hydrodynamic properties of the door.

However, it is unusually expensive to manufacture wide trawl doors of steel, plate steel being the primary universal material for pelagic trawl door construction, and likewise it is unusually and even prohibitively expensive to manufacture true optimised airfoil shaped trawl door constructions of steel.

In an attempt to redress these difficulties, currently pending Icelandic Patent Application number 7371 titled: "HIGH SPEED, INCREASED HYDRODYNAMIC EFFICIENCY, LIGHT-WEIGHT MOLDED TRAWL DOOR AND METHODS FOR USE AND MANUFACTURE" proposes the use of a special plastic materials that are both capable of withstanding the rigors of field conditions experienced by pelagic trawl doors, unlike previous plastics employed in trawl doors, providing improved buoyancy in water, while simultaneously is capable of being molded into any shape by the placement of a liquid solution into a mold of any shape, the liquid then solidifying into the desired solid plastic having the shape of the mold.

However, while the teachings of currently pending Icelandic Patent Application no. 7371 actually appear to teach a trawl door construction and methods for an optimally efficient pelagic trawl door, it is a fact that the method of manufacturing of such a trawl door is entirely unprecedented, and the start up costs to obtain and to put into production the needed manufacture machinery is too expensive to be useful to the vast majority of pelagic trawl door manufacturers. Additionally, the necessary plastics material itself is proprietary and not currently available to the vast majority of trawl door manufacturers.

A non-patent document by HANSEN KURT, WILLEMAN DAVID entitled "Flydetrawlskovle, Forskellige geometriske parametres indflydelse på flydetrawlskovles virkningsgrad" (August 1990 (1990-08), DANSK INSTITUT FOR FISKERITEKNOLOGI OG AKVAKULTUR , HIRTSHALS (DK)) teaches at page 21 to 23 various experiments of different types of trawl door. In one example, a single foil forming part of a 4-foil trawl door has an aspect ratio of 2.45. A single of the foils was selected and examined.

It may be appreciated that a continuing long felt need exists in the field for a pelagic trawl door construction made from universally available materials and using widely accessible and already in place production machinery and methods, that also is substantially more efficient than known trawl door constructions which also use such universally available materials, widely accessible production machinery and methods.

### DEFINITIONS

ASPECT RATIO: means the Trawl Door Height relative to the Trawl Door Width. For example, a trawl door having a height of two (2) meters and a width of one (1) meter has an Aspect Ratio of 2:1 (two to one).

PROFILE: means the cross sectional shape of a trawl door or of a portion of a trawl door as viewed in a plane perpendicular to the vertical dimension of that portion of the trawl door.

TRAWL DOOR: means any of a variety of essentially rigid structures having generally rigid deflectors (e.g. not formed of a foldable fabric as a kite) and capable of being deployed in a body of water behind a towing vessel, and usually attached at a fore end to a terminal end of a main towing warp or other towing line defending from the towing vessel and at an aft end to another line itself ultimately attached to another towed item. In operation, trawl doors have the function of converting a portion of forward motion and/or energy that is imparted by the towing vessel into horizontally directed force for the purpose of spreading in a generally horizontal orientation a trawl net, seismic surveillance towed array complex, paravane line or the like.

TRAWL DOOR HEIGHT: the height of a trawl door is defined by the shortest distance between the trawl door's upper edge and the trawl door's lower edge. The Trawl Door Height measurement generally does not include any aspect of a purely weight shoe, or the like, but rather relates to the portion of the trawl door's structure that is capable of efficiently generating lift and/or thrust.

TRAWL DOOR WIDTH: the width of a trawl door is defined by the shortest distance between the trawl door leading and trailing edges as taken from a profile of a portion of the trawl door. For trawl doors with straight leading and trailing edges, the width is generally the same anywhere along the vertical dimension of the trawl door. For a trawl door with a "swept back" configuration, the trawl door's width also may be expressed as an average of a sum of several trawl door width measurements taken at various profile locations located at varying positions along the vertical dimension of the trawl door, as such trawl doors typically have narrower widths at their top and bottom extremities than at their central portion.

### OBJECTS OF THE PRESENT INVENTION

It is an object of the present invention to provide for a trawl door that is capable of operating with substantially higher efficiencies than known trawl doors currently on the market.

It is yet another object of the present invention to provide for a trawl door construction permitting more economically lowered water resistance and simultaneously increased trawl mouth horizontal opening (spread) as compared with other known trawl door constructions.

### BRIEF SUMMARY OF THE INVENTION

The present invention provides, from a first aspect, a trawl door according to appended claim 1.

From another aspect, the present invention provides a method according to appended claim 14.

In one embodiment, the trawl door includes a lift enhancing structure in the form of two slats with varying slat angles disposed forward of main deflector plate. A trawl door having all these features in combination exhibits, contrary to the state of the knowledge in the field and contrary to the trend in the art, improved efficiency during actual trawling operations when compared to flat trawl doors of any type, and in particular provides for greater trawl spread while simultaneously never before has been achieved.

It has been found that a Vee-shaped trawl door with a 3:1 aspect ratio provides a 50% better performance than existing trawl doors.

### BRIEF DESCRIPTION OF THE DRAWINGS

FIG. 1 is a side view of the inner side surface of a trawl door of the present invention as viewed from a point located on the port side of a starboard trawl door of the present invention.
FIG. 2 is an aspect view of the trawl door shown in Fig. 1 as taken from a point located in front of and looking at the inner side surface of the trawl door of Fig. 1.
FIG. 3 is a plan view of the profile of the trawl door of Fig. 1 as taken along section line 5-5 of FIG. 1.
FIG. 4 is a more detailed view of FIG. 3.
FIG. 5 is a cross-sectional view of a modified form of main deflector useful in the present invention.
FIG. 6 is a cross-sectional view of a trawl door having a main deflector as shown in Fig. 5 with leading and trailing edge structures attached.

### DETAILED DESCRIPTION

A trawl door according to the preferred embodiment of the present invention comprises a Vee-shaped door having a high aspect ratio of at least 2.75:1 and preferably 3:1 and above.

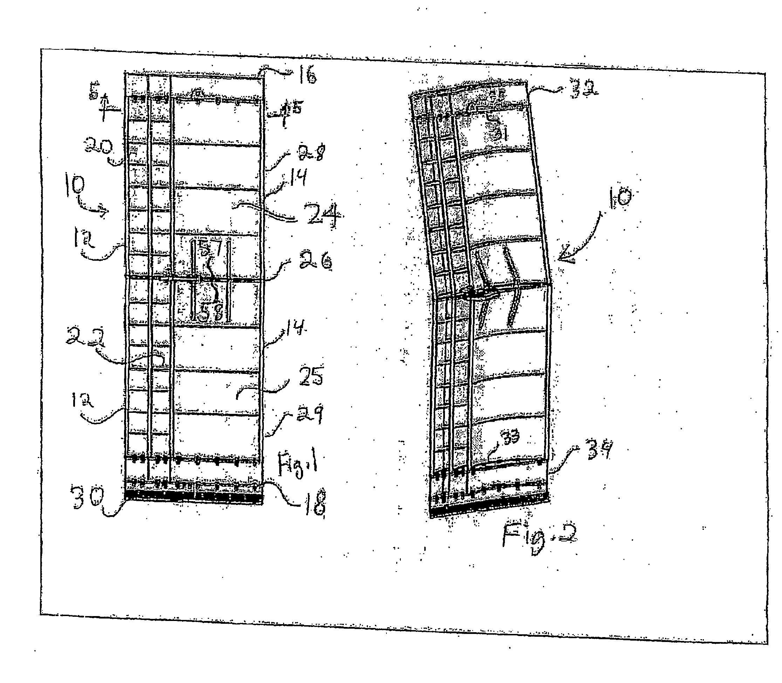

As shown in Figs 1 and 2, trawl door 10 of the present invention includes trawl door leading edge 12, trawl door trailing edge 14, free trawl door upper edge 16 and free trawl door lower edge 18.

The trawl door is formed by an upper trawl door section 28 and a lower trawl door section 29 joined together along facing lower edge 57 of the upper trawl door section 28 and upper edge 58 of the lower trawl door section 29 by a center plate 26. Each trawl door section 28, 29 is formed by a main deflector body 24, 25 and each main deflector body is provided with a leading edge lift enhancing structure in the form of one or more slats 20, 22 which form leading edge slots. The leading slat 20 has a leading edge which constitutes the leading edge 12 of the trawl door while trailing slat 22 is situated aft of the leading slat 20 and forward of the leading edge of the main deflector. The trailing edge of the main deflector constitutes the trailing edge 14 of the trawl door.

The slots formed by the leading edge slats 20, 22 extend substantially the whole length of the main deflector body of each trawl door section 28, 29 and are held in position due to the ends of the slats 20, 22 being located in end plates 31, 33 (Fig. 2) as well as a center plate 26.

Center plate 26 is part of a load bearing frame that assists in transmitting towing loads from the towing vessel to the towed trawl or other item, and upon which is located a towing warp connector (not shown). Detachably affixed to trawl door lower section 29 is variable mass weight plate 30, for aiding in the stabilization of trawl door 10 during field operations by permitting selection of an appropriate amount of weight of the intended altitude in the water column and use of trawl door 10 of the present invention.

As shown in Fig. 2, trawl door 10 is a Vee shaped trawl door, as apparent by the fact that the outer side surface surfaces of upper and lower trawl door sections 28 and 29, respectively, lie in different planes. Each door section 28, 29 generally lies within planes that generally diverge and/or converge at the center of center plate 26 with an angle less than 180° (one hundred and eighty degrees). In the embodiment shown in Fig. 2, the sections 28, 29 lie in planes which have an included angle of approximately 170°. The leading and trailing edges of the door are straight i.e. not swept back' and the included angle is located between the convex surfaces of the main deflectors.

It has been found that the aspect ratio of the door is important. We have found that the higher the aspect ratio the better as long as the trawl door remains rigid in use. We have found that with aspect ratio at least 2:1 improved performance of a Vee-shaped door can be achieved. According to the invention, the aspect ratio is at least 2.75:1. The practical upper limit for a trawl door made of plate material i.e. of uniform thickness, is of the order of 6:1. As a result, we prefer to use aspect ratios of 3:1 and above with at least 3.2:1 or 3.3:1 being preferred. However, we would prefer to use at least 4:1 or 5:1. It has been found that as the aspect ratio increases, it may be necessary to decrease the included angle between the sections 28, 29.

As shown in Fig. 2, trawl door 10 of the present invention also includes optional upper extension piece 32 attached to upper trawl door section 28 at the end plate 31, and optional lower extension piece 34 attached to lower trawl door section 29 at the end plate 33. The extension pieces are detachably attached to the remainder of trawl door 10, thus permitting varying the amount of lift and/or thrust generating structure of trawl door 10 of the presents invention. It will be appreciated that were an upper extension piece 32 to be added but not lower extension piece, or vice versa, the center plate 26 will not be located equidistant the upper and lower edges of the trawl door. Should upper and lower extensions pieces 32 and 34 be removed, then the upper and lower edges 16 and 18 would change positions,, and become generally flush with upper and lower load bearing end plates 31 and 33, respectively.

Hoisting ring 35 is located upon upper load bearing plate 31 for the purpose of providing an easily accessible connection point for the securing and lifting of trawl door 10, such as may occur during transport, positioning aboard the vessel and storage.

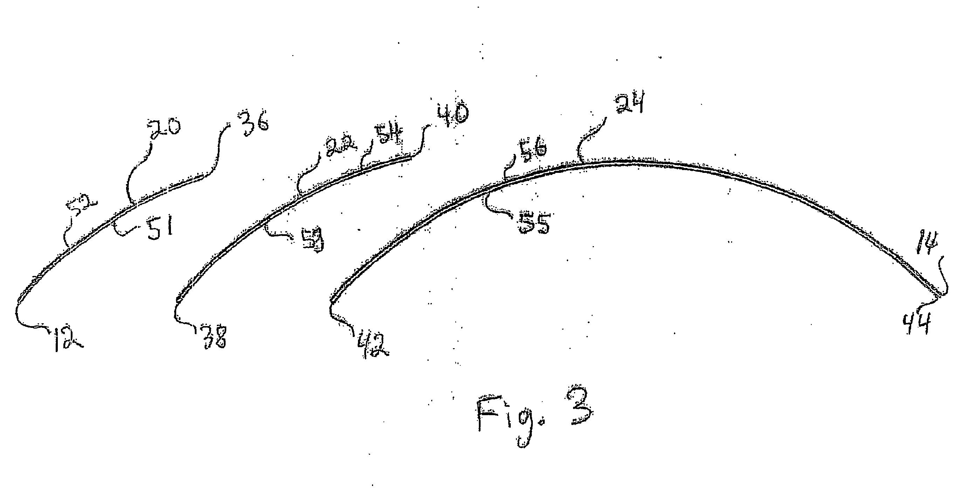

Fig. 3 shows the cross section of trawl door 10 of the present invention as taken along section line 5-5 of Fig. 1. As no other substantial structural bodies are present in the cross section of trawl door 10 at the precise location of section line 5-5, a clean view of the profile of trawl door 10's primary lift and/or thrust generating structures are shown.

As shown, leading slat 20 includes a leading slat leading edge 12 that is also trawl door leading edge 12. Leading slat 20 also includes a leading slat trailing edge 36, leading slat inner side surface 51 and leading slat outer side surface 52.

Similarly, trailing slat 22 includes trailing slat leading edge 38, trailing slat trailing edge 40, trailing slat inner side surface 53 and trailing slat outer side surface 54. Similarly again, main deflector 24 includes main deflector leading edge 42, main deflector trailing edge 44, main deflector inner side surface 55 and main deflector outer side surface 56.

The main deflector 24 and slats 20 and 22 are all formed from plate material, preferably steel. The main deflector is an arc of a circle. Consequently, the inner and outer surfaces of each member have the same curvature. Preferably the slats are also arcs of circles and even more preferably the same circle as that of the main deflector

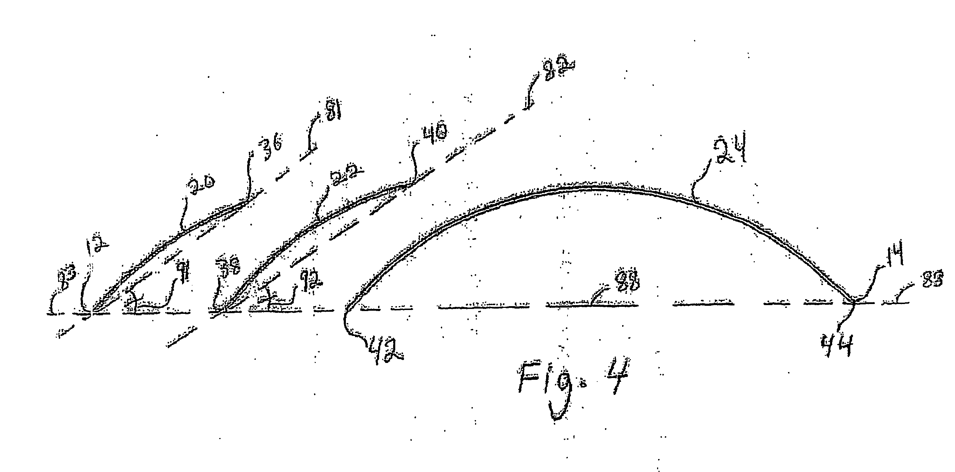

Fig. 4 is a more descriptive view of Fig. 3:
In further reference to Fig. 4, lying within a plane that is perpendicular to the long (and vertical) dimension of trawl door 10 at section line 5-5, and that is as well coplanar to that portion of trawl door 10 at whatever point the profiles of the trawl door 10 is viewed, are imaginary straight dashed lines 81, 82, and 83.

Imaginary straight dashed line 81 joins leading and trailing edges 12, 36 of leading slat 20. Imaginary straight dashed line 82 joins leading and trailing edges 38, 40 of trailing slat 22. Imaginary straight dashed line 83 joins the trawl door leading and trailing edges 12, 14 as well as the leading edges 38, 42 of the trailing slare 22 and main deflector 24, respectively.

Reference numeral line 91 indicates a "leading slat angle". The leading slat angle is defined as the angle of convergence of imaginary straight dashed lines 81 and 83 on that side of imaginary straight dashed line 83 that is most proximal the inner side surface 51 of leading slat 20. That is, and in other words, the leading slat angle is defined as the acute angle made by the convergence of a first imaginary line connecting the shortest distance between leading and trailing edges 12, 36 of leading slate 20 with a second imaginary line connecting the shortest distance between leading and trailing edges 12, 14 of trawl door 10, as taken in a same plane, and co-planar to a profile of trawl door 10.

Similarly, reference numeral 92 indicates a "trailing slat angle". The trailing slat angle is defined as the angle of convergence of imaginary straight dashed lines 82 and 83 on that side of imaginary straight dashed line 83 that is most proximal the inner side surface 53 of trailing slat 22. That is, and in other words, the trailing slat angle is defined as the acute angle made by the convergence of a first imaginary line connecting the shortest distance between leading and trailing edges 38, 40 of trailing slat 22 with a second imaginary line connecting the shortest distance between leading and trailing edges 12, 14 of trawl door 10, as taken in a same plane, and co-planar to a profile of trawl door 10.

In the instant example of trawl door 10 of the present invention, the "main deflector angle" is zero. That is because the main deflector angle, as defined by the acute angle created by the divergence of an imaginary straight line joining the leading and trailing edges 12, 14 of trawl door 10 from the imaginary straight line 88 which joins the leading and trailing edges 42, 14 of main deflector 24, is coaxial (as well as parallel), and thus its angle of convergence and/or divergence is zero degrees. However, some variants of trawl door 10 of the present invention may be proposed where there exists a main deflector angle that is greater than zero.

The actual length of the slat 20, i.e. the distance between the leading and trailing edges of the slat 20, is such that the trailing edge 36 of the slat 20 is on the tangent plane of the main deflector 24 which is parallel to the dashed line 88 while the trailing edge 40 of the slat 22 extends beyond this tangent plane.

In order to make a presently preferred embodiment of trawl door 10 of the present invention, trawl door 10 of the present invention is a Vee-shaped trawl door, which includes two trawl door sections 24, 25 mounted at an angle with respect to each other such that the included angle is approximately 170°:and preferably 173°. Each door section comprises:
a leading slat 20, a trailing slat 22 and a main deflector, wherein:
   (i) the leading slat angle 91 is greater than the trailing slat angle 92;
   (ii) the trailing slat angle is at least thirty degrees, and preferably thirty one degrees;
   (iii) the leading slat angle is at least thirty two degrees, and preferably thirty four degrees;
   (iv) a width of the main deflector (as defined by the shortest distance between main deflector leading and trailing edges 42, 14 as taken from a profile of a portion of the trawl door) that is equal to two thirds (0.666) of the width of the trawl door, when viewed in the same profile as the width of the trawl door, and at least within plus or minus five percent (5%) of two thirds (0.666) of the width of the trawl door;
   (v) a shortest distance from leading slat leading edge 12 to main deflector leading edge 42 that, when viewed in the same profile, is 1/3 (one third) of the width of the trawl door, or within plus or minus seven percent (7%) of one third (1/3) of the trawl door's width;
   (vi) the trawl door has an aspect ratio (trawl door height relative to trawl door width) of at least 2.4:1 (two point four to one) and preferably 2.5:1 (two point five to one) or greater, with 2.7:1 (two point seven to one) or greater being preferred, and with up to and exceeding 4.5:1 (four point five to one) being useful; and
   (vii) a radius of
      a) the main deflector;
      b) the leading slat 20; and
      c) the trailing slat 22,
   each are equal to or generally equal to 1/2 (one half) the distance of the width of trawl door 10 when compared in the same view of a same profile, and are at least within plus or minus five percent (5%) of 1/2 (one half) the distance of the width of the trawl door.

Such an embodiment of a trawl door 10 of the present invention has shown in direct scale modelling to create significantly greater trawl mouth spread for a given amount of drag. Surprising, unexpectedly and contrary to the state of the art as well as contrary to the state of knowledge in the field, the spreading forces generated by such a trawl door construction of the present invention as well as the distribution and magnitude of the spreading forces is maximised by the use of a Vee shaped construction for a trawl door 10 of the present invention made in the fashion described above. In fact, a Vee shaped construction of the trawl door 10 of the present invention has been shown to provide the greatest trawl net speed, while simultaneously providing for less drag, thus simultaneously permitting greater vessel spread, despite the fact that such, result is contrary to the trend in the industry to engineer, manufacture and employ flat pelagic trawl door constructions wherever maximal efficiency of pelagic trawling operations is desired.

Because the main deflector bodies and slats are all made from plate material and are arcs of a circle, they can each be manufactured in a cost-effective manner and the door sections each assembled without the need for special tools.

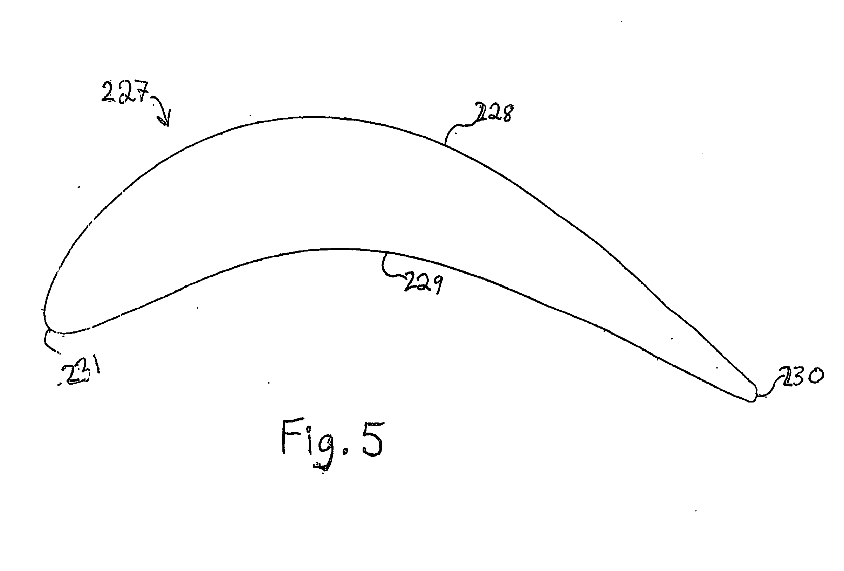

A modification to the trawl door shown in Figs 1 and 2 which can usefully be made is for the main deflector bodies to have an airfoil cross-section rather than being an arc of a circle. The main deflector bodies can still be made of plate material as in the previous embodiment but a further modification is to make each main deflector body 227 with differently curved convex and concave surfaces as shown in Fig 5. This is preferably achieved by utilising synthetic materials which are moulded to form a lightweight high strength trawl door as disclosed in our earlier International application number PCT/IS2005/000016.

FIG. 5 shows to scale or essentially to scale a modified profile 227 of a main deflector body of a trawl door 1 of the present invention, as used in the instant example of the trawl door of the present invention to form the profiles of upper and lower main deflector bodies. The complete shape and teachings of the profile 227 shown in FIG. 5 are the same as the profile for that maximally efficient low-speed high-lift airfoil profile having its profile known by the name and/or code 'NACA-338117' as found in the Visual Foil Version 4.1' by Hanley Innovations (Ocala Florida, USA). None of the known art has suggested using this profile in any portion of known trawl doors.

In further description, profile 227 includes convex outer side 228, concave inner side 229, trailing edge 230 and leading edge 231. Preferably, the widest point of the profile 227 is approximately seventeen percent to eighteen percent (17% to 18%) of the length of the profile's chord, and is at least eleven percent (11 %) of the length of the profile's chord, and is located front of center of the profile's chord. Preferably, the widest point of the profile is located at a point along the profiles chord that corresponds to a distance that is front of center of the chord by at least three percent 3% of the chord's length.

As noted in Fig. 1, disposed forward of the leading edge 42, 231 of a main deflector body of any deflector body of the present invention, is a lift enhancing structure. Preferably, at least one slat is employed with any main deflector body of the present invention having the profile taught hereinabove. None of the known art has suggested using slats in combination with a deflector body having a profile similar to the shape of the profile taught herein as most preferred for the shape of the profile of any main deflector body for use in a trawl door of the present invention.

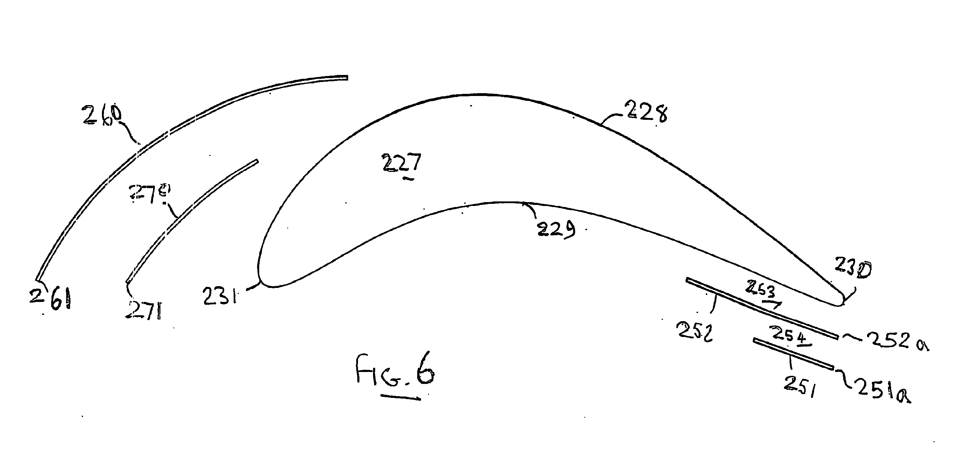

As shown in Fig. 6, an upper forward leading slat 260 has a profile generally the same as the profile of the outer 228 of the main deflector body at an area proximal the widest point of the profile 227 and is held spaced from the leading edge 231 by being fixed into the end plates with the leading edge 261 of the slat 260 in line with the leading edge 231 of the main deflector body. As shown, the leading edge 261 of the slat 260 in line with the leading edge 231 of the main deflector body. As shown, the leading edge 261 of the slat 260 is spaced from the leading edge 231 by the same distance as the leading edge 231 is spaced from the widest point of the profile 227. The length of the slat 260 is such that it is above the top surface of the profile 227 and because of the differences in profile as between the slat 260 and the portion of the profile 227 between its leading edge and the top of the profile 227, a slot is formed along the length of the leading edge 231. The slot diminishes in area as one moves from the leading edge 231 along the profile 227 and this formation channels water flowing through the slot to energise the boundary layer about the profile 227 and retain separation of the boundary layer which increases lift.

It is preferred to further accentuate this lift by adding an upper forward trailing slat 270. This slat 270 is located in the slot formed by the slat 260 and has a leading edge 271 in line with the leading edges 261 and 231 as well as a profile which is generally the same as the profile of the outer side 228 at an area defmed as rearward of the leading edge 231 but forward of the widest point of the profile 227. The slat 270 thus divides the slot along the leading edge 231 into two which enhances the energisation of the boundary layer. The slat 270 is shorter than the slat 260 being about 50% of the length of the slat 260 and so does not extend above the top surface of the profile 227.

Fig 6 also shows a modification which maybe made to the trawl door as shown in Fig 1. This modification comprises the provision of a trailing edge lift enhancing structure in the form of one or more trailing edge slats 251 and 252 located under the profile 227 which form inner and outer trailing edge slots 253, 254. The trailing edge slat or slats 251, 252 are generally flat and extend along the length of the trailing edge 230 and are fixed to the end plates. They lie generally parallel of the portion of the concave inner side 229 proximal the trailing edge 236 of the profile 227. The slat 251 is approximately half the width of the slat 252 and their trailing edges 251a, 252a are generally aligned with the trailing edge 230 of the profile 227. These slats maintain the boundary layer effects of the water on the concave inner side 229 of the profile which also enhances the performance of the profile 227.

It is to be understood that each main deflector body of the trawl door will be provided with the leading edge slat arrangement shown in Fig 5 and may be also provided with the trailing edge slat arrangement if desired. What is done for one trawl door section is done to the other in order to generate stable conditions.

Such a construction of a trawl door of the present invention has been shown to be useful in field operations when the angle of attack of the trawl door is 18 (eighteen) degrees, allowing much reduced drag. Similarly, while at conventional angles of attack used with known trawl doors, a Vee-shaped trawl door construction with 3:1 aspect ratio produces at least 50 (fifty) percent greater efficiency than any other known trawl door constructions. These superior results lead to substantially greater efficiency of fishing operations and have never been achieved by known trawl door constructions.

## Claims

1. A trawl door having first and second door portions (28,29) each having opposed leading and trailing edges (12,14) and having upper and lower edges, the door portions being joined together along opposed upper and lower edges such that they lie in different planes that diverge, **characterised in that**, the trawl door comprises an aspect ratio of at least 2.75:1.

2. A trawl door according to claim 1, wherein the ratio is at least 3:1.

3. A trawl door according to claim 1, wherein the ratio is at least 4:1.

4. A trawl door according to any one of claims 1 to 3 wherein the different planes in which the door portions lie have an included angle of 170° at least.

5. A trawl door according to claim 4 wherein the included angle is 173°.

6. A trawl door according to any one of the preceding claims wherein each door portion includes a main deflector portion which is an arc of a circle in cross-section.

7. A trawl door according to any one of claims 1 to 5 wherein each door portion includes a main deflector portion which is an aerofoil shape in cross-section.

8. A trawl door according to claim 7 wherein each main deflector portion has concave and convex surfaces of different shape.

9. A trawl door according to any one of claims 1 to 8 wherein each trawl door portion includes a lift enhancing structure forward of the main deflector portion, the lift enhancing structure constituting the leading edge of the respective door portion.

10. A trawl door according to claim 9 wherein the lift enhancing structure comprises at least one slat.

11. A trawl door according to claim 10 wherein the at least one slat is made of plate material.

12. A trawl door according to claim 10 or 11 wherein the at least one slat has a cross-sectional shape which corresponds to a portion of the shape of the main deflector portion.

13. A trawl door according to anyone of claims 9 to 12 wherein the lift enhancing structure is disposed forward of the main deflector by a distance equal to 1/3 the width of the trawl door.

14. A method of making a trawl door having first and second door portions each having opposed leading and trailing edges and having upper and lower edges, the door portions being joined together along opposed upper and lower edges such that they lie in different planes that diverge, the method comprising the step of dimensioning the trawl door such that its aspect ratio is at least 2.75:1.

15. A method according to claim 14 wherein the door portions are formed separately and are joined together alongside opposed edges by being attached to a center plate.

16. A method according to claim 14 or 15 wherein the different planes in which the door portions lie have an included angle of 170° at least.

17. A method according to claim 16 wherein the included angle is 173 °.

18. A method according to any one of claims 14 to 17 wherein each door portion further comprises a main deflector portion and the method further comprises a step of forming the main deflector portion as an arc of a circle.

19. A method according to any one of claims 14 to 17 wherein each door portion further comprises a main deflector portion and the method further comprises a step of forming the main deflector portion as airofoil shape in cross-section.

20. A method according to claim 19 wherein each main deflector portion is manufactured so as to have concave and convex surfaces of different shape.

21. A method according to any one of claims 14 to 20 wherein each trawl door portion includes a lift enhancing structure forward of the main deflector portion, the lift enhancing structure constituting the leading edge of the respective door portion.

22. A method according to claim 21 wherein the lift enhancing structure comprises at least one slat.

23. A method according to claim 22 wherein the at least one slat is made of plate material.

24. A method according to claim 22 or 23 wherein the at least one slat has a cross-sectional shape which corresponds to the shape of its associated main deflector portion.

## Patentansprüche

1. Scherbrett, das erste und zweite Scherbrettabschnitte (28, 29) hat, die jeweils gegenüberliegende vordere und hintere Ränder (12, 14) und obere sowie untere Ränder haben, wobei die Scherbrettabschnitte entlang der gegenüberliegenden oberen und unteren Ränder derart miteinander verbunden sind, dass sie in unterschiedlichen divergierenden Ebenen liegen, **dadurch gekennzeichnet, dass** das Scherbrett ein Seitenverhältnis von wenigstens 2,75:1 hat.

2. Scherbrett nach Anspruch 1, bei dem das Verhältnis wenigstens 3:1 ist.

3. Scherbrett nach Anspruch 1, bei dem das Verhältnis wenigstens 4:1 ist.

4. Scherbrett nach einem der Ansprüche 1 bis 3, bei dem die unterschiedlichen Ebenen, in der die Scherbrettabschnitte liegen, einen Winkel von wenigstens 170° einschließen.

5. Scherbrett nach Anspruch 4, bei dem der eingeschlossene Winkel 173° beträgt.

6. Scherbrett nach einem der vorhergehenden Ansprüche, bei dem jeder Scherbrettabschnitt einen Hauptdeflektorabschnitt enthält, der den Querschnitt eines Kreisbogens hat.

7. Scherbrett nach einem der Ansprüche 1 bis 5, bei dem jeder Scherbrettabschnitt einen Hauptdeflektorabschnitt enthält, der den Querschnitt einer Tragfläche hat.

8. Scherbrett nach Anspruch 7, bei dem jeder Hauptdeflektorabschnitt konkave und konvexe Oberflächen unterschiedlicher Form hat.

9. Scherbrett nach einem der Ansprüche 1 bis 8, bei dem jeder Scherbrettabschnitt eine Auftriebsverstärkungsstruktur vor dem Hauptdeflektorabschnitt hat, wobei die Auftriebsverstärkungsstruktur den vorderen Rand des entsprechenden Scherbrettabschnittes bildet.

10. Scherbrett nach Anspruch 9, bei dem die Auftriebsverstärkungsstruktur wenigstens einen Vorflügel enthält.

11. Scherbrett nach Anspruch 10, bei dem der wenigstens eine Vorflügel aus einem Plattenmaterial besteht.

12. Scherbrett nach Anspruch 10 oder 11, bei dem der wenigstens eine Vorflügel eine Querschnittsform hat, die einem Abschnitt der Form des Hauptdeflektorabschnittes entspricht.

13. Scherbrett nach einem der Ansprüche 9 bis 12, bei dem die Auftriebsverstärkungsstruktur vor dem Hauptdeflektor in einem Abstand angeordnet ist, der gleich 1/3 der Breite des Scherbrettes ist.

14. Verfahren zum Herstellen eines Scherbrettes, das erste und zweite Scherbrettabschnitte hat, die jeweils gegenüberliegende vordere und hintere Ränder und obere sowie untere Ränder haben, wobei die Scherbrettabschnitte entlang der gegenüberliegenden oberen und unteren Ränder derart miteinander verbunden sind, dass sie in unterschiedlichen divergierenden Ebenen liegen, wobei das Verfahren den Schritt des Dimensionierens des Scherbrettes derart umfasst, dass dessen Seitenverhältnis wenigstens 2,75:1 beträgt.

15. Verfahren nach Anspruch 14, bei dem die Scherbrettabschnitte separat ausgebildet und entlang gegenüberliegender Ränder miteinander verbunden werden, indem sie an einer zentralen Platte angebracht werden.

16. Verfahren nach Anspruch 14 oder 15, bei dem die unterschiedlichen Ebenen, in denen sich die Scherbrettabschnitte befinden, einen Winkel von wenigstens 170° einschließen.

17. Verfahren nach Anspruch 16, bei dem der eingeschlossene Winkel 173° beträgt.

18. Verfahren nach einem der Ansprüche 14 bis 17, bei dem jeder Scherbrettabschnitt weiterhin einen Hauptdeflektorabschnitt enthält und das Verfahren weiterhin einen Schritt des Ausbildens des Hauptdeflektorabschnittes als Kreisbogen umfasst.

19. Verfahren nach einem der Ansprüche 14 bis 17, bei dem jeder Scherbrettabschnitt weiterhin einen Hauptdeflektorabschnitt enthält und das Verfahren weiterhin einen Schritt des Ausbildens des Hauptdeflektorabschnittes in einem Querschnitt einer Tragfläche umfasst.

20. Verfahren nach Anspruch 19, bei dem jeder Hauptdeflektorabschnitt derart gefertigt wird, dass er konkave und konvexe Oberflächen unterschiedlicher Form hat.

21. Verfahren nach einem der Ansprüche 14 bis 20, bei dem jeder Scherbrettabschnitt eine Auftriebsverstärkungsstruktur vor dem Hauptdeflektorabschnitt enthält, wobei die Auftriebsverstärkungsstruktur den vorderen Rand des entsprechenden Scherbrettabschnittes bildet.

22. Verfahren nach Anspruch 21, bei dem die Auftriebsverstärkungsstruktur wenigstens einen Vorflügel enthält.

23. Verfahren nach Anspruch 22, bei dem der wenigstens eine Vorflügel aus einem Plattenmaterial gefertigt wird.

24. Verfahren nach Anspruch 22 oder 23, bei dem der wenigstens eine Vorflügel eine Querschnittsform hat, die der Form seines zugehörigen Hauptdeflektorabschnittes entspricht.

## Revendications

1. Panneau de chalut comportant des première et deuxième parties de panneau (28, 29) ayant chacune des bords antérieur et postérieur opposés (12, 14) et ayant des bords supérieur et inférieur, les parties de panneau étant unies entre elles suivant les bords supérieur et inférieur opposés de manière qu'elles se trouvent dans des plans différents qui divergent, **caractérisé en ce que** le panneau de chalut comporte un rapport de forme d'au moins 2,75:1.

2. Panneau de chalut selon la revendication 1, dans lequel le rapport est d'au moins 3:1.

3. Panneau de chalut selon la revendication 1, dans lequel le rapport est d'au moins 4:1.

4. Panneau de chalut selon l'une quelconque des revendications 1 à 3, dans lequel les plans différents dans lesquels se trouvent les parties de panneau ont un angle d'ouverture d'au moins 170°.

5. Panneau de chalut selon la revendication 4, dans lequel l'angle d'ouverture est de 173°.

6. Panneau de chalut selon l'une quelconque des revendications précédentes, dans lequel chaque partie de panneau comprend une portion de déflection principale qui est un arc de cercle en coupe transversale.

7. Panneau de chalut selon l'une quelconque des revendications 1 à 5, dans lequel chaque partie de panneau comprend une portion de déflection principale qui est un profil aérodynamique en coupe transversale.

8. Panneau de chalut selon la revendication 7, dans lequel chaque portion de déflection principale a des surfaces concave et convexe de profil différent.

9. Panneau de chalut selon l'une quelconque des revendications 1 à 8, dans lequel chaque partie de panneau de chalut comprend une structure d'assistance au soulèvement à l'avant de la portion de déflection principale, la structure d'assistance au soulèvement constituant le bord antérieur de la partie de panneau respective.

10. Panneau de chalut selon la revendication 9, dans lequel la structure d'assistance au soulèvement comprend au moins un volet.

11. Panneau de chalut selon la revendication 10, dans lequel l'au moins un volet est constitué d'un matériau en plaque.

12. Panneau de chalut selon la revendication 10 ou 11, dans lequel l'au moins un volet a un profil en coupe transversale qui correspond à une portion du profil de la portion de déflexion principale.

13. Panneau de chalut selon l'une quelconque des revendications 9 à 12, dans lequel la structure d'assistance au soulèvement est disposée devant le déflecteur principal à une distance égale à 1/3 de la largeur du panneau de chalut.

14. Procédé de fabrication d'un panneau de chalut comportant des première et deuxième parties de panneau ayant chacune des bords antérieur et postérieur opposés et ayant des bords supérieur et inférieur, les parties de panneau étant unies entre elles suivant les bords supérieur et inférieur opposés de manière qu'elles se trouvent dans des plans différents qui divergent, le procédé comprenant l'étape de dimensionnement du panneau de chalut de manière que son rapport de forme soit d'au moins 2.75:1.

15. Procédé selon la revendication 14, dans lequel les parties de panneau sont formées séparément et sont unies entre elles suivant des bords opposés en étant fixées à une plaque centrale.

16. Procédé selon la revendication 14 ou 15, dans lequel les plans différents dans lesquels se trouvent les parties de panneau ont un angle d'ouverture d'au moins 170°.

17. Procédé selon la revendication 16, dans lequel l'angle d'ouverture est de 173°.

18. Procédé selon l'une quelconque des revendications 14 à 17, dans lequel chaque partie de panneau comprend en outre une portion de déflection principale et le procédé comprend en outre une étape de formation de la portion de déflexion principale comme un arc de cercle.

19. Procédé selon l'une quelconque des revendications 14 à 17, dans lequel chaque partie de panneau comprend en outre une portion de déflection principale et le procédé comprend en outre une étape de formation de la portion de déflexion principale comme un profil aérodynamique en coupe transversale.

20. Procédé selon la revendication 19, dans lequel chaque portion de déflection principale est fabriquée pour avoir des surfaces concave et convexe de profil différent.

21. Procédé selon l'une quelconque des revendications 14 à 20, dans lequel chaque partie de panneau de chalut comprend une structure d'assistance au soulèvement à l'avant de la portion de déflection principale, la structure d'assistance au soulèvement constituant le bord antérieur de la partie de panneau respective.

22. Procédé selon la revendication 21, dans lequel la structure d'assistance au soulèvement comprend au moins un volet.

23. Procédé selon la revendication 22, dans lequel l'au moins un volet est constitué d'un matériau en plaque.

24. Procédé selon la revendication 22 ou 23, dans lequel l'au moins un volet a un profil en coupe transversale qui correspond au profil de sa portion de déflexion principale associée.
